Europäisches Patentamt

European Patent Office

Office européen des brevets

(11) Veröffentlichungsnummer: **0 447 887 B1**

## EUROPÄISCHE PATENTSCHRIFT

(45) Veröffentlichungstag der Patentschrift: **21.12.94**

(21) Anmeldenummer: **91103529.3**

(22) Anmeldetag: **08.03.91**

(51) Int. Cl.5: **B01D 19/02**, B04C 9/00, D21D 5/26

(54) **Einrichtung zur Abtrennung der Luft aus Flotationstrüben.**

(30) Priorität: **21.03.90 DE 4009042**

(43) Veröffentlichungstag der Anmeldung:
**25.09.91 Patentblatt 91/39**

(45) Bekanntmachung des Hinweises auf die
Patenterteilung:
**21.12.94 Patentblatt 94/51**

(84) Benannte Vertragsstaaten:
**AT BE CH DE DK ES FR GB IT LI NL SE**

(56) Entgegenhaltungen:
**EP-A- 0 234 101**
**DE-A- 3 519 374**
**FR-A- 1 031 114**
**FR-A- 2 344 670**

**SOVIET INVENTIONS ILLUSTRATED, Sektion C, Woche C14, 14. Mai 1980, Zusammenfassung Nr. 24818C/14, Derwent Publications Ltd, London, GB; & SU-A-676 607 (VENEROV K.V.) 30-07-1979**

(73) Patentinhaber: **J.M. Voith GmbH**
**St. Pöltener-Strasse 43**
**D-89522 Heidenheim (DE)**

(72) Erfinder: **Schweiss, Peter**
**Hindenburgstrasse 40**
**W-7907 Langenau (DE)**
Erfinder: **Dörflinger, Hans-Dieter**
**Igelhecke 6**
**W-7920 Heidenheim (DE)**
Erfinder: **Nolte, Michael**
**August-Macke-Strasse 2**
**W-7920 Heidenheim (DE)**

(74) Vertreter: **Weitzel, Wolfgang, Dr.-Ing.**
**Friedenstrasse 10**
**D-89522 Heidenheim (DE)**

**Beschreibung**

Die Erfindung betrifft eine Einrichtung zur Abtrennung der Luft aus einer stark schaumhaltigen Flotationstrübe, bestehend aus einer Flotationseinrichtung, einem Hydrozyklon, einem oberhalb der Einlaßöffnung des Hydrozyklons angeordneten mechanischen Schaumzerstörer mit einem Rotorlaufrad und einem Behälter.

Die JP-A-01 038 107 zeigt im Prinzip eine Einrichtung zur Abtrennung der Luft aus einem Schaum mit einem Hydrozyklon und einem mechanischen Schaumzerstörer, der in einem Aufsatzteil des Hydrozyklons angeordnet ist. Diese Anordnung weist ein Gebläse auf, damit der Schaum in den Hydrozyklon und in den Schaumzerstörer gelangt und die Anordnung somit betriebsfähig ist. Ein bekannter Schaumzerstörer ist in der DE-OS 35 19 374 beschrieben.

Der Erfindung liegt die Aufgabe zugrunde, eine Einrichtung zur Abtrennung von Luft aus schaumhaltigen Suspensionen derart zu gestalten, daß der Schaum auch ohne Anwendung eines Gebläses gefördert wird, und daß die Schaumzerstörung mit geringerem Aufwand als bisher erreicht werden kann. Diese Aufgabe wird durch die Merkmale des Anspruches 1 gelöst.

Gemäß der Erfindung ist an den Sammelbehälter für die Flotationstrübe der Flotationseinrichtung ein Hydrozyklon besonderer Bauart in bestimmter Weise angeschlossen. Es wird am Auslaßende des konischen Teils des Hydrozyklons die entlüftete Suspension abgezogen, wobei ein Gegendruck an dieser Öffnung eingestellt wird, der in der Weise geregelt wird, daß eine relativ große, schmale Eintrittsöffnung des Hydrozyklons für die noch stark mit Luft versetzte Suspension nicht vollständig von dem Flüssigkeitswirbel, der sich in dem Hydrozyklon bildet, verschlossen wird, so daß noch genügend Eintrittsquerschnitt für den Eintritt des Schaumanteils in den Hydrozyklon verbleibt. Es bildet sich in dem Hydrozyklon aufgrund einer relativ großen Rotationsgeschwindigkeit ein Gas- bzw. Luftkern, in welchem sich auch der Schaum zu einem großen Teil ansammelt. Dieser Schaum wird durch den vorhandenen Zulaufdruck nach oben gepreßt, wo er zu dem mechanischen, einen mit Radialbeschaufelung versehenen Rotor aufweisenden Schaumzerstörer über einen konischen, kegelstumpfförmigen oder pyramidenstumpfförmigen Saugstutzen gelangt. Es werden dadurch relativ große Scherkräfte auf die Schaumbläschen ausgeübt, so daß sie zerstört werden. Die Luft gelangt nach oben hin ins Freie, während die abgetrennte Flüssigkeit aus dem unteren Teil dieses Schaumzerstörers abfließt.

Dabei ist es günstig, wenn am Austrittsende des in der Kegelspitze des kegelstumpfförmigen Teils des Hydrozyklons sich eine Wirbelkernstütze von rotationssymmetrischer Gestalt befindet, dessen Höhe vorzugsweise 3 bis 8 % des Durchmessers dieser Austrittsöffnung der entlüfteten Flüssigkeit beträgt, wenn diese Wirbelkernstütze auf einer der genannten Austrittsöffnung gegenüberliegend angeordneten Prallplatte befestigt ist, die einen Abstand zu der Auslaßöffnung zwischen 10 und 25 % des Durchmessers dieser Öffnung hat. Vorzugsweise beträgt dabei der Außendurchmesser dieser Prallplatte zwischen dem 2- und 3-fachen des Durchmessers dieser Auslaßöffnung.

Nachfolgend wird die Erfindung anhand des in den Figuren der Zeichnung dargestellten Ausführungsbeispiels erläutert. Dabei stellt

Figur 1     eine prinzipielle Darstellung der Schaltung der Flotationseinrichtung einschließlich der Anordnung der Entlüftungseinrichtung, im wesentlichen im Längsschnitt in bezug auf die Flotationseinrichtung,

Figur 2     in etwas vergrößertem Maßstab ebenfalls prinzipiell, und zwar im wesentlichen im Querschnitt der Flotationseinrichtung, die Schaltungsanordnung,

Figur 3     einen prinzipiellen Axialschnitt durch die Entlüftungseinrichtung,

Figur 4     eine Vergrößerung des oberen Teils derselben,

Figur 5     eine Vergrößerung des unteren Teils derselben und

Figur 6     einen Querschnitt durch das Laufrad des Rotors des mechanischen Schaumzerstörers

dar.

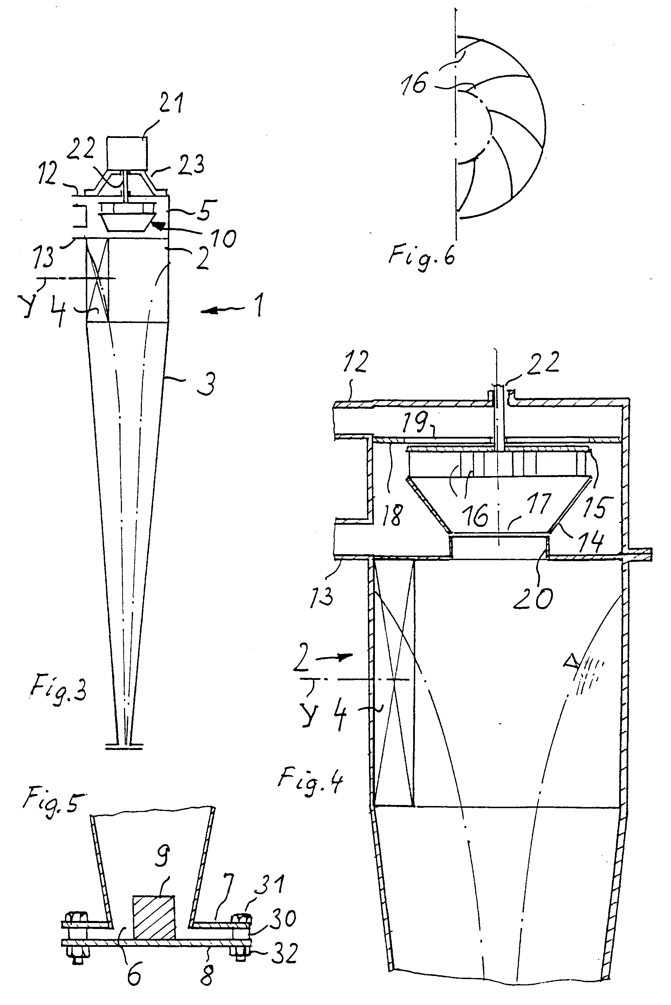

Nachfolgend wird zunächst die Entlüftungseinrichtung anhand der Figuren 3 bis 6 erläutert.

Der Hydrozyklon 1 weist einen zylindrischen Eintrittsbereich 2 und einen kegelstumpfförmigen Trennbereich 3 auf, dessen Kegelspitzenwinkel zwischen 8 und 16° beträgt. Die Einlaßöffnung 4 für das stark mit Luft versetzte Gemisch aus Flüssigkeit und Schaum ist relativ schmal ausgeführt mit einem Verhältnis der Breite b zur Höhe h b/h = 2:5 bis 1:4, vorzugsweise 1:3. Am Austrittsende für die entlüftete Flüssigkeit an der Kegelstumpfspitze befindet sich eine Prallplatte 8 mit einem Abstand gegenüber der Auslaßöffnung 6 zwischen 10 und 25 % des Durchmessers dieser Öffnung. Eine Wirbelkernstütze 9 ist auf dieser Prallplatte 8 zentral angeordnet, die eine Höhe zwischen 3 und 8 % und einen Durchmesser zwischen 10 und 20 % des Durchmessers dieser Auslaßöffnung 6 aufweist. Gegenüber der Prallplatte befindet sich eine Gegenplatte 7 gleichen Durchmessers, die an der Austrittsöffnung an dem Hydrozyklon befestigt ist. Der Abstand zwischen den beiden Platten wird durch Flanschstücke 30 hergestellt, die mittels Schraubbolzen 31 und Schraube 32 jeweils festgelegt sind. Der Durchmesser der Prallplatte 8 (der gleich dem Außendurchmesser der Gegenplatte 7 ist) beträgt zwischen dem 2- und 3-fachen des Durchmessers der Auslaßöffnung 6.

In den Figuren 3 und 4 ist durch die strichpunktierten Linien die Flüssigkeitssäule angedeutet, die sich als Wirbel in dem Hydrozyklon einstellt. Man erkennt, daß dieser Wirbel durch Gegendruckaufbau so eingestellt ist, daß an der Eintrittsöffnung 4 genügend Raum für den Eintritt von Schaum verbleibt. Dieser Schaum wird samt der abgeschiedenen Luft nach oben gedrückt, wo er durch einen Zufuhrstutzen 20 in einen Saugstutzen 14 des Rotors 10 des mechanischen Schaumzerstörerteils 5 gelangt. In diesem Fall ist dieses Teil 5 als ein Aufsatzteil zum Hydrozyklon 1 ausgebildet. Der Rotor 10 weist ein Laufrad auf, das mit radialen Schaufeln 16 und einer Deckplatte 15 ausgebildet ist. Dieses Laufrad wird über eine Welle 22 von einem Motor 21 angetrieben, der auf dem Aufsatzteil 5 mittels einem Lagerbock 23 abgestützt ist.

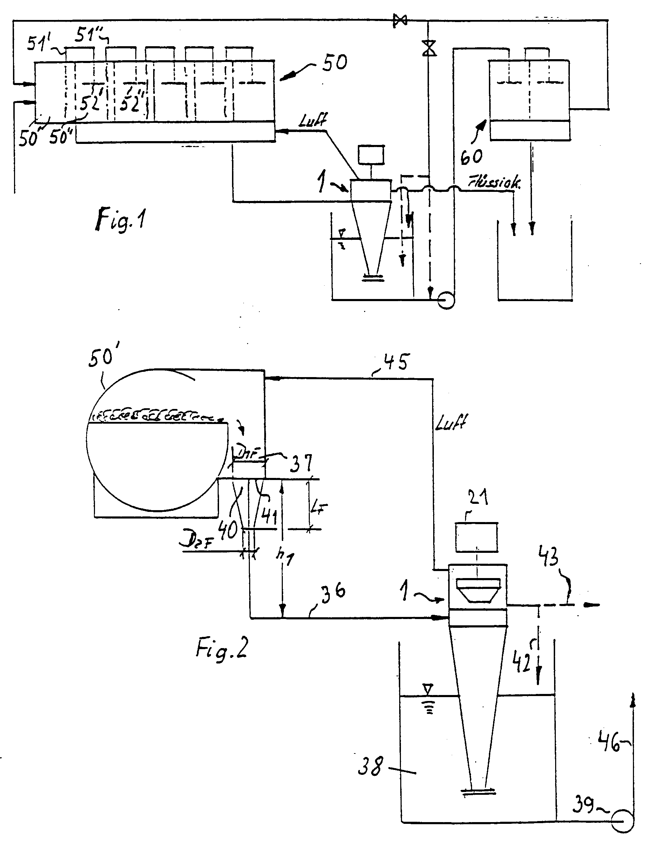

Der Saugstutzen weist eine Eintrittsöffnung 17 auf, die wesentlich kleiner ist als der Außendurchmesser der Rotorbeschaufelung 16. Der Öffnungswinkel dieses kegelstumpfförmig ausgebildeten Saugstutzens beträgt zwischen 70 und 105°. Durch die Saugwirkung werden große Scherkräfte auf die Schaumbläschen ausgeübt, die, sofern sie am Ende des Saugstutzens noch nicht zerstört sind, durch die Prallwirkung der Radialbeschaufelung und die dort weiter erfolgende Beschleunigung noch weiter zerstört werden. Die abgetrennte Luft kann somit oben aus dem Stutzen 12 entweichen, und die entlüftete Flüssigkeit tritt durch den Stutzen 13 am unteren Teil des mechanischen Schaumzerstörers aus. Jedoch enthält diese Flüssigkeit noch einen beträchtlichen Anteil an Luft, vor allem aber auch an Druckfarbe für den Fall, daß es sich bei der Suspension um Altpapierfasersuspension aus bedrucktem Papier, wie Zeitungen, Karton o.ä., handelt. Diese Flüssigkeitsmenge wird vorzugsweise in einer Sekundär-Flotationsanlage weiter gereinigt. Dies ist in Fig. 2 mit der Pumpe 39 angedeutet, die die entlüftete Flüssigkeit über Leitung 46 der Sekundär-Flotationseinrichtung 60 zuführt, nachdem sie über Leitung 42 in einen Sammelbehälter 38 eingeleitet wurde.

In Figur 1 und 2 ist prinzipiell die Schaltung und die mit 50 bezeichnete Primär-Flotationseinrichtung und die mit 60 bezeichnete Sekundär-Flotationseinrichtung dargestellt. Die Primär-Flotationseinrichtung besteht aus lauter parallel geschalteten einzelnen Flotationszellen 50', 50'' usw., die durch Leitungen 51' und 51'' in Reihenschaltung miteinander verbunden sind. Diese Leitungen münden jeweils in Gemisch-Zufuhreinrichtungen 52', 52'' usw., die die zu flotierende Suspension mit Luft vermischt in die einzelnen Flotationszellen einleiten. Allen Flotationszellen gemeinsam ist jeweils eine Schaumrinne, die in bezug auf die Primär-Flotationseinrichtung mit 37 in Fig. 2 angedeutet ist. Am Boden dieser Schaumrinne befindet sich die Auslaßöffnung 41 für die stark mit Schaum und Luft vermischte Trübe des Flotationsprozesses, die über einen Ablauftrichter 40 in die Rohrleitung 36 eingeleitet wird, die die Suspensionsmischung dem Hydrozyklon 1 zuführt. Das Neigungsverhältnis der Trichterwandung in bezug auf die Mittelachse des Ablauftrichters liegt vorzugsweise zwischen 1:8 und 1:15. Der Höhenabstand $h_1$ zwischen der Auslaßöffnung 41 der Schaumrinne 37 und der Mittelachse Y der Eintrittsöffnung 4 des Hydrozyklons 1 sollte mindestens 2,5 m betragen.

Die Auslaßöffnung für die entlüftete Flüssigkeit des Hydrozyklons an seiner Kegelstumpfspitze ist in einem Sammelbehälter 38 angeordnet, in welcher sich ein Suspensionsspiegel einstellt, der so geregelt wird, daß der gewünschte Gegendruck zu der Wirbelströmung im Hydrozyklon erzeugt wird. Dieses Flüssigkeitsniveau soll etwa 1,5 bis 2 mWS entsprechen. Die in der Entlüftungseinrichtung abgetrennte Luft kann z.B. über Leitung 45 wieder in den Bereich der Schaumrinne 37 der Primär-Flotationseinrichtung eingeleitet werden. Man erhält so hinsichtlich der Geruchsbelästigung ein geschlossenes System.

Als Bemessungshinweis für den Ablauftrichter der Schaumrinne 37 kann man folgende, ungefähre Werte annehmen:

$$D_{1F} = 500 \text{ mm}, D_{2F} = 300 \text{ mm},$$

welcher Durchmesser dann auch der Rohrleitung 36 entspricht, und

$$L_F = 1000 \text{ mm}.$$

Vorzugsweise ist der Saugstutzen 14 Bestandteil des Rotors des mechanischen Schaumzerstörers 5. Dieser braucht jedoch nicht unbedingt als Aufsatzteil für den Hydrozyklon ausgeführt zu sein, sondern kann mit der Auslaßöffnung 20 desselben über eine Rohrleitung verbunden sein, so daß er sich dann z.B. etwa auf dem Niveau des Bodens der Schaumrinne 37 befinden kann. Auch eine noch höhere Anordnung ist durchaus möglich. Ferner ist es auch möglich, diesen Schaumzerstörer so anzuordnen, daß die Rotationsachse seines Rotors horizontal liegt. Die Höhendifferenz zwischen dem Boden der Schaumrinne 37 und der Einlaßöffnung 4 des Hydrozyklons ist im wesentlichen abhängig von den Eigenschaften des Schaumes (z.B. seines Widerstandes gegen Zerfallen).

## Patentansprüche

1. Einrichtung zur Abtrennung der Luft aus einer stark schaumhaltigen Flotationstrübe, bestehend aus einer Flotationseinrichtung (50), einem Hydrozyklon (1), einem oberhalb der Einlaßöffnung (4) des Hydrozyklons (1) angeordneten mechanischen Schaumzerstörer (10) mit einem Rotorlaufrad (15, 16) und einem Behälter (38) mit den folgenden Merkmalen:

   a1) der Hydrozyklon (1) hat einen kegelstumpfförmigen Trennbereich (3),

   a2) die Auslaßöffnung (6) für den luftarmen Flüssigkeitsanteil befindet sich im Bereich der Kegelspitze unten am Hydrozyklon,

   a3) der mechanische Schaumzerstörer (10) ist mit dem Einlaßbereich (2) des Hydrozyklons (1) verbunden,

   a4) der Hydrozyklon (1) hat einen kegelspitzen Winkel zwischen 8 und 16°,

   a5) der Hydrozyklon (1) weist im Auslaßbereich der Kegelstumpfspitze eine Prallplatte (8) im Abstand von 10 - 25 % des Durchmessers dieser Auslaßöffnung (6) des Hydrozyklons (1) von dieser auf,

   a6) der Hydrozyklon ist im Bezug auf die Mittelachse (Y) seiner Einlaßöffnung (4) seines Einlaßbereichs (2) mindestens 2,5 m unterhalb der Ablaßöffnung (41) der stark schaumhaltigen Trübe an der Flotationseinrichtung (50) angeordnet, sowie

   a7) der Hydrozyklon weist eine schmale, rechteckige Einlaßöffnung (4) mit einem Verhältnis der Breite (b) zu ihrer Höhe (h) b/h = 0,25 - 0,35 auf,

   b) das Laufrad (15, 16) ist mit radialer Beschaufelung ausgebildet und eintrittsseitig mit einem kegelstumpfförmig oder pyramidenförmig ausgebildeten Saugstutzen (14) einer Länge (Höhe) von zwischen dem 1,5- bis 4-fachen der Höhe der Rotorschaufel (16) nachgeschaltet, dessen Eintrittsöffnung von seinem engeren Ende gebildet ist,

   c) der Eintrittsöffnung des Saugstutzens (14) ist der Zufuhrstutzen (20) des Hydrozyklons (1) angepaßt,

   d) es besteht ein geregelter Flüssigkeits-Gegendruck am Kegelstumpf-Auslaßende des Hydrozyklons (1), der zu dem Zweck in den mit Flüssigkeit gefüllten Behälter (38) eintaucht.

2. Einrichtung nach Anspruch 1, gekennzeichnet durch eine zylindrische Wirbelkernstütze (9) in der Auslaßöffnung (6) des Hydrozyklons (1) von einem Durchmesser von 10 bis 20 % und einer Höhe von 3 bis 8 % des Durchmessers der Auslaßöffnung (6) und der auf der Prallplatte (8) aufgesetzt ist.

3. Einrichtung nach einem der Ansprüche 1 oder 2, dadurch gekennzeichnet, daß der Durchmesser von Prallplatte (8) bzw. Gegenplatte (7) zwischen dem 2- und 3-fachen des Durchmessers der Austrittsöffnung (6) des Hydrozyklons (1) beträgt.

4. Einrichtung nach einem der Ansprüche 1 bis 3, dadurch gekennzeichnet, daß der mechanische Schaumzerstörer (10) höchstens 8 m oberhalb der Mittelachse (Y) der Einlaßöffnung (4) des Hydrozyklons (1) angeordnet ist.

5. Einrichtung nach einem der Ansprüche 1 bis 4, dadurch gekennzeichnet, daß bei einer mit einer Schaumrinne (37) versehenen Flotationseinrichtung (50) die Ablaßöffnung (41) für die stark schaumhaltige Trübe am Boden der Schaumrinne (37) vorgesehen ist, und daß sich nach unten hin an diese Ablaßöffnung (41) ein Ablaßtrichter (40) anschließt, dessen Trichterwand eine Neigung gegen die Trichtermittelachse zwischen 1:8 und 1:15 aufweist.

## Claims

1. Apparatus for separating air from a heavily frothed flotation liquid, comprising a flotation means (50), a hydrocyclone (1), a mechanical froth destroyer (10) arranged above the inlet (4) of the hydrocyclone (1) with a rotor blade wheel (15, 16) and a tank (38) with the following features:

   a1) the hydrocyclone (1) has a separation area (3) constructed in the shape of a truncated cone;

   a2) the outlet (6) for the liquid component with a low air content is located at the bottom on the hydrocyclone in the area of the tip of the cone;

   a3) the mechanical froth destroyer (10) is connected to the inlet area (2) of the hydrocyclone (1);

   a4) the hydrocyclone (1) has a cone tip angle of between 8° and 6°,

   a5) in the outlet area of the tip of the truncated cone, the hydrocyclone (1) has an impact plate (8) spaced at a distance therefrom amounting to 10 - 25% of the diameter of this outlet (6) of the hydrocyclone (1);

   a6) the hydrocyclone is arranged on the flotation means (50) at least 2.5 m below the discharge opening (41) for the heavily frothed flotation liquid in relation to the central axis (Y) of its inlet (4) in its inlet area (2); and

a7) the hydrocyclone has a narrow, rectangular inlet (4) with a ratio of width (b) to height (h) of b/h = 0.25 - 0.35;

b) the blade wheel (15, 16) is provided with radial blading and is connected on the inlet side with a suction connector (14) in the shape of a truncated cone or pyramid with a length (height) of between 1.5-to 4-times the height of the rotor blade (16), the inlet of which forms its narrower end;

c) the inlet of the suction connection (14) is matched to the supply connection (20) of the hydrocyclone (1);

d) there is a controlled liquid counterpressure at the truncated cone outlet end of the hydrocyclone (1), which is immersed for that purpose in the tank (38) filled with liquid.

2. Apparatus according to Claim 1, characterised by a cylindrical vortex core support (9) in the outlet (6) of the hydrocyclone (1) with a diameter of 10 to 20% and a height of 3 to 8% of the diameter of the outlet (6), said vortex core support (9) sitting on the impact plate (8).

3. Apparatus according to one of Claims 1 or 2, characterised in that the diameter of the impact plate (8) or counter plate (7) lies between twice to 3-times the diameter of the outlet (6) of the hydrocyclone (1).

4. Apparatus according to one of Claims 1 to 3, characterised in that the mechanical froth destroyer (10) is arranged 8 m at maximum above the central axis (Y) of the inlet (4) of the hydrocyclone (1).

5. Apparatus according to one of Claims 1 to 4, characterised in that in the case of a flotation means (50) provided with a froth channel (37), the discharge opening (41) is arranged on the base of the froth channel (37) for the heavily frothed flotation liquid; and that a discharge funnel (40) connects downwards onto this discharge opening (41), the funnel wall being at a slope of between 1:8 and 1:15 in relation to the central axis of the funnel.

**Revendications**

1. Installation destinée à la séparation de l'air d'une eau de flottation chargée et fortement écumeuse, ladite installation se composant d'un dispositif de flottation (50), d'un hydrocyclone (1), d'un destructeur mécanique d'écume (10) disposé au-dessus de l'ouverture d'entrée (4) de l'hydrocyclone (1)pourvu d'une turbine de rotor (15, 16) et d'une cuve (38), et comportant les caractéristiques suivantes :

a1) l'hydrocyclone (1) a une zone de séparation tronconique (3),

a2) l'orifice de sortie (6)du liquide pauvre en air se trouve dans la zone de la pointe du cône dans la partie basse de l'hydrocyclone,

a3) le destructeur mécanique d'écume (10) est raccordé à la zone d'entrée (2) de l'hydrocyclone (1),

a4) l'hydrocyclone (1) a un angle de cône effilé compris entre 8 et 16°,

a5) l'hydrocyclone (1) comporte dans la zone de sortie de la pointe du cône tronqué une plaque de déviation (8) située à une distance de l'orifice de sortie (6) de l'hydrocyclone (1) comprise entre 10 et 25 % du diamètre de cet orifice,

a6) l'hydrocyclone est disposé par rapport à l'axe médian (Y) de son ouverture d'entrée (4) de sa zone d'entrée (2) à au moins 2,5 m au-dessous de l'ouverture d'évacuation (41) de l'eau chargée et fortement écumeuse, du dispositif de flottation (50)

a7) l'hydrocyclone comporte une ouverture d'entrée rectangulaire étroite (4) ayant un rapport de sa largeur (b) à sa hauteur (h): b/h = 0,25 à 0,35,

b) la turbine (15, 16) est réalisée avec un aubage radial qui pénètre côté entrée, dans un manchon d'aspiration tronconique, ou pyramidal, (14) d'une longueur (hauteur) de 1,5 fois à 4 fois la hauteur de l'aube du rotor (16), dont l'extrémité la plus serrée forme l'orifice d'entrée,

c) un raccord d'alimentation (20) de l'hydrocyclone (1) est adapté à l'ouverture d'entrée du manchon d'aspiration (14),

d) une contre-pression régulée du liquide est produit à l'extrémité tronconique de sortie de l'hydrocyclone (1) qui, dans ce but, plonge dans la cuve (38) remplie de liquide.

2. Installation selon la revendication 1 caractérisée par un stabilisateur cylindrique (9) du coeur du tourbillon, situé dans l'orifice de sortie (6) de l'hydrocyclone (1), lequel stabilisateur a un diamètre de 10 à 20 % et une hauteur de 3 à 8 % du diamètre de l'orifice de sortie (6), et est fixé sur la plaque de déviation (8).

3. Installation selon l'une des revendications 1 ou 2 caractérisée par le fait que le diamètre de la plaque de déviation (8) et d'une contre-plaque (7) se situe entre le double et le triple du diamètre de l'orifice de sortie (6) de l'hydrocyclone (1).

4. Installation selon l'une des revendications 1 à 3 caractérisée par le fait que le destructeur mécanique d'écume (10) est disposé à 8 m au maximum au-dessus de l'axe médian (Y) de l'orifice d'entrée (4) de l'hydrocyclone (1).

5. Installation selon l'une des revendications 1 à 4 caractérisé par le fait que, le dispositif de flottation (50) étant pourvu d'une goulotte à écume (37), un orifice d'évacuation (41) de l'eau chargée et fortement écumeuse est disposée au fond de la goulotte d'écume (37) et qu'une trémie d'évacuation (40) est raccordée en dessous de cet orifice d'évacuation (41), dont la paroi de trémie est inclinée entre 1:8 et 1:15 par rapport à l'axe médian de la trémie.

Fig.1

Fig.2

Fig.3

Fig.5

Fig.6

Fig.4